# EUROPEAN PATENT SPECIFICATION

(11) **EP 2 204 088 B1**
(45) Date of publication and mention of the grant of the patent: **07.09.2011**
(21) Application number: 09180897.2
(22) Date of filing: 29.12.2009
(51) Int. Cl.: A01K 5/00, A01K 5/02, A23N 17/00

(54) **Method and system for controlling loading of food products in a food mixing unit**
Verfahren und Anlage zur Steuerung der Ladung von Lebensmitteln in eine Lebensmittelmischvorrichtung
Procédé et système pour contrôler le chargement des produits alimentaires dans une unité de mélange alimentaire

(30) Priority: 30.12.2008 IT BO20080787
(43) Date of publication of application: 07.07.2010
(73) Proprietor: DINAMICA GENERALE S.r.l., 46025 Poggio Rusco (IT)
(72) Inventor: Bresciani, Matteo, 46022, Felonica (IT); Barbi, Alberto, 46025, Poggio Rusco (IT)
(74) Representative: Jorio, Paolo

(56) References cited:
- WO-A-2007/040388
- WO-A-2008/097080
- WO-A-2008/118005

## Description

The present invention relates to a method for controlling the loading of food products in a food mixing unit and to corresponding control system, see e.g. document WO- A- 2008/097080.

In particular, the present invention can be adopted advantageously but not exclusively in the zootechnical sector to check that food products loaded in a food mixing unit by means of at least one loader unit are effectively the food products programmed in a pre-established food recipe, to which the description below will explicitly refer without prejudice to its generality.

It is known that many livestock enterprises and stock-farms prepare the ration of food to be administered to each animal using a mixing unit consisting of a mixing wagon comprising a bin in which several food products are loaded by means of an external loader unit comprising, for example, an engine-driven vehicle with mechanical shovel. The mixer wagon also comprises one or more augers arranged inside the bin to mix the food products in the bin. The food products are loaded in the bin of the mixer wagon in a specific order according to the weights established by a recipe prepared previously by a nutritionist. Typically, each animal has different nutritional requirements according to breed, stage of growth and general conditions. Furthermore, the animals are divided into groups characterised by similar nutritional requirements. Therefore, each stock-farm has to prepare several food product recipes.

A prior art mixer wagon is equipped with a weighing device comprising load cells coupled with the bin in order to detect the weight of the contents of the bin, and a control unit connected to the load cells in order to check loading of the food products. The control unit comprises a memory in which one or more recipes are saved, a keyboard for entry of data and commands by an operator dedicated to the mixer wagon, for example to select the recipe, a processing unit to run a load programme defined by the recipe selected, a display to show information during execution of the recipe, for example to display the current weight recorded by the load cells and a buzzer to indicate that the pre-established weight of each food product has been reached.

In use, the load programme scans the food products to be loaded in a certain order established by the selected recipe and emits an operator alarm when the pre-established weight of each food product is reached so that the operator can order the loader unit to load the next food product. The alarm is emitted, for example, in the form of an acoustic signal by means of a buzzer and/or in the form of a visual signal by means of the display. The loader unit takes each food product to be loaded from at least one relative stocking area.

Using the aforementioned control unit, the operator of the mixer wagon controls the quantity of each food product loaded. However, the operator of the mixer wagon does not have the possibility of automatically and accurately checking that each food product loaded by the loader unit in the mixer wagon is that effectively established by the recipe. In other words, the operator must personally verify that the stocking area from which the loader unit takes the food product is the correct area for the food product programmed.

The object of the present invention is to provide a method and system for controlling loading of food products in a food mixing unit that eliminates the above-mentioned drawbacks and is also easy and economical to produce.

According to the present invention, a method and system for controlling loading of food products in a food mixing unit are furnished as defined in the attached claims.

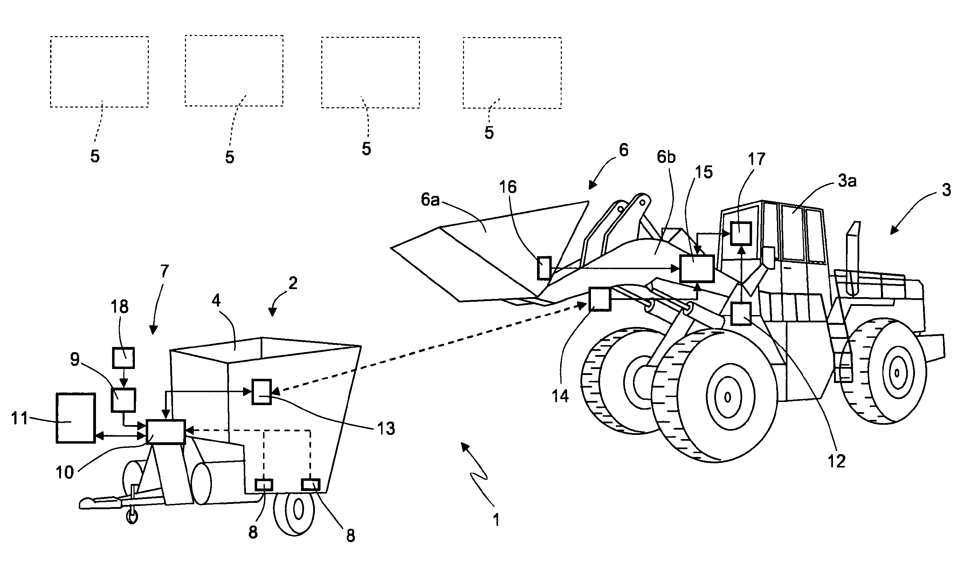

To facilitate understanding of the present invention, a preferred embodiment is now described, for the purpose of providing a non-limiting example, with reference to the single figure attached, which provides as schematic view of the system for controlling loading of food products in at least one food mixing unit by means of at least one loader unit, such system being implemented according to the present invention.

In the sole figure, 1 indicates, in its entirety, the system implemented according to this invention, 2 indicates the mixing unit, which is preferably but not necessarily mobile, and 3 indicates the loader unit.

In the example of the attached figure, the mixing unit 2 comprises a towable type mixer wagon comprising a bin 4 to receive the food products to be mixed and an auger (not shown) to mix the food products in the bin 4. Each of the food products to be loaded in the mixing unit 2 is usually stacked in at least one relative stocking area 5. The loader unit 3 is mobile in order to move to one stocking area 5 at a time and to transport a quantity of the relative food product to the mixing unit 2. The loader unit 3 comprises loading means 6 able to take a quantity of a food product from the respective stocking area 5 and to load the food product taken in the bin 4 of the mixing unit 2. In the example of the attached figure, the loader unit 3 is of the self-propelled type, i.e. it consists of an engine-driven vehicle, and in particular of a tractor, equipped with a cab 3a for an operator, and the loading means 6 comprise a bucket or mechanical shovel 6a mounted in a mobile manner on the tractor by means of an articulated arm 6b.

Referring again to the attached figure, the system 1 comprises a weighing device 7 mounted on the mixing unit 2 for checking the weight of the food products loaded in the bin 4. The weighing device 7 comprises one or more load cells 8 coupled to the bin 4 in order to detect the weight of the food products in the bin 4, and a memory 9 in which to save at least one recipe of food products to be loaded in the bin 4. Each recipe comprises a list of food products and a pre-established weight for each food product. The weighing device 7 also comprises a processing unit 10 for execution of a load programme defined by a selected recipe, an interface device 11 equipped with relative keyboard, display and buzzer for interaction between the operator of the mixing unit 2 and the weighing device 7, so that the operator is able to enter commands, for example, to select the recipe to be followed, and receive information from the weighing device 7 during execution of the recipe, for example to display the weight of each food product detected by the load cells 8 and to emit acoustic signals when the pre-established weight of each food product is reached.

According to the present invention, the system 1 comprises at least a GPS receiver 12 mounted on the loader unit 3 to detect the geographic coordinates of the place where the loader unit 3 is located, a first wireless type communication module 13 which is incorporated in the weighing device 7 and is connected to the processing unit 10, and at least one second wireless type communication module 14 which is mounted on the loader unit 3, and is connected, by means of a control unit 15, to the GPS receiver 12 and is able to communicate with the first communication module 13 to allow the processing unit 10 to acquire the geographic coordinates detected by the receiver 12 at the moment in which the loader unit 3 takes a food product from a relative stocking area 5. The communication modules 13 and 14 are of the type able to communicate via radio waves or infrared rays.

The system 1 also comprises a weight sensor 16, which is coupled to the mechanical shovel 6a and is connected to the control unit 15 in order to detect the presence of a food product in the loading means 6, and a further interface device 17, which is mounted in the cab 3a of the loader unit 3, is connected to the control unit 15 and is provided with relative keyboard, display and buzzer so that the operator of the loader unit 3 can enter commands and receive signals relating to loading of a food product, for example to display the weight detected by the weight sensor 16.

Lastly, the weighing device 7 is fitted with a communication port 18 connected to the memory 9 to permit saving of the recipe and of further relative information in the memory 9. The communication port 18 consists, for example, of a reader for so-called memory cards, or of a short-range wireless communication port, or a USB port. The structure of the system 1 described above permits implementation of the method for controlling loading of food products in a mixing unit 2 of the present invention, such method being described below.

For the sake of simplicity but without any loss of generality, in the case considered below the memory 9 of the weighing device 7 saves a single recipe and each food product of the recipe can be taken from a single stocking area 5.

First of all, according to the method, each stocking area 5 is identified by means of a respective set of points in space, each defined by the relative geographic coordinates, referred to hereinafter as GC1. In particular, the set of points comprises at least three points to define a determined polygon in space that encloses at least part of the relative stocking area 5. The set of points that identifies the relative stocking area 5 is associated to each food product of the recipe. The recipe is then saved in a generic database held on a central computer, not shown, saving for each food product of the recipe the weight of the food product and the geographic coordinates GC1 of the set of points associated to such food product.

The recipe and the geographic coordinates GC1 associated to the food products of the recipe are saved in the memory 9 of the weighing device 7 of the mixing unit 2 by means of the communication port 18 of the weighing device connected to the memory 9. The system 1 is now ready for use.

In use, the operator of the mixing unit 2 selects a recipe by means of the interface device 11 which replies by displaying the first food product being loaded. Hereinafter, the wording "food product being loaded" means the food product that, according to the list of food products of the recipe, must be loaded at a certain time in the mixing unit 2. In the case in which several loader units 3 are present, for example if there is a type of loader unit 3 for each type of food product of the recipe, or the loader units 3 are distributed amongst the various stocking areas 5 if these are at a considerable distance from each other, the operator of the mixing unit 12 selects one of the available loader units 3. Possibly, information regarding the food product being loaded, such information comprising an identification code of the food product, the weight of the food product and the geographic coordinates GC1 associated to the food product, is transmitted by the weighing device 7 to the loader unit 3 selected by means of communication modules 13 and 14. Such information is displayed by the interface device 17 in order to notify this to the operator who is on the loader unit 3 selected.

At this point, the operator of the selected loader unit 3 drives such loader unit 3 to the stocking area 5 relative to the food product being loaded in order to take the programmed quantity of such food product.

The method comprises a step of acquiring, by the weighing device 7, the geographic coordinates, indicated in the following description by GC2, that identify the place in which the loader unit 3 is located when it takes the food product from the stocking area 5. This step is based on use of the GPS receiver 12 mounted on the loader unit 3. In particular, the step of acquisition of the geographic coordinates GC2 comprises the following steps:
- detecting, by means of the weight sensor 16, the presence of the food product on the loading means 6, i.e. presence of the food product in the shovel 6a;
- querying the GPS receiver 12 in order to obtain the geographic coordinates GC2 when the food product is present on the loading means 6; and
- trasmitting immediately the geographic coordinates GC2 to the weighing device 7 by means of the communication modules 13 and 14.

The step of acquisition of the geographic coordinates GC2 is followed by a step of comparison, by the weighing device 7, of the geographic coordinates GC2 with the geographic coordinates GC1 associated to the food product being loaded, to check whether the loader unit 3 is taking the correct food product, i.e. that the loader unit 3 is taking the food product from the correct stocking area 5. In particular, the step of comparison consists in checking whether the point identified by the geographic coordinates GC2 is located inside the polygon defined by the set of points associated to the food product being loaded.

If the result of the check on the geographic coordinates is positive, the loader unit 3 can return to the mixing unit 2 in order to load the food product just taken in the bin 4. After checking that the weight of the food product loaded in the bin 4 is correct, the weighing device 7 moves to the second food product of the recipe which becomes the new food product being loaded and the steps described above are repeated.

If the result of the check on the geographic coordinates is negative, i.e. if the point identified by the geographic coordinates GC2 is outside the polygon, the interface device 11 is activated to emit an acoustic and/or visual error signal in order to inform the operator of the mixing unit 2 that an incorrect food product is being taken and the load programme of the recipe may possibly be interrupted. The negative result of the comparison is also transmitted, by means of the communication modules 13 and 14, to the loader unit 3 that has taken the incorrect food product so that the relative interface device 17 can be activated to emit a similar error signal to also notify the operator of the loader unit 3 that an incorrect food product is being taken.

The above steps relating to acquisition of the geographic coordinates GC2 and comparison of the geographic coordinates GC2 with the geographic coordinates GC1 are implemented by the system 1 by suitably configuring the control unit 15 so that it queries the GPS receiver 12 when the weight sensor 16 detects the presence of the food product in order to obtain the geographic coordinates GC2 and orders the communication module 14 to transmit the geographic coordinates GC2, and suitably configuring the processing unit 10 so that it acquires, by means of the communication module 13, the geographic coordinates GC2 transmitted by the communication module 14 of the loader unit 3 that has taken the food product, compares the geographic coordinates GC2 acquired with the geographic coordinates GC1 associated to the food product being loaded and activates the interface device 11 so that the relative display and/or buzzer issues the above-mentioned error signal in the case in which the result of the comparison is negative. Furthermore, the processing unit 10 is configured to activate the communication module 13 so as to communicate the negative result of the comparison to the loader unit 3 that has taken the food product, and the control unit 15 is configured to receive, by means of the communication module 14, the negative result of the comparison transmitted by the weighing device 7 and therefore to command the interface device 17 in such a way that the relative display and/or buzzer emits the above-mentioned error signal.

Therefore, the method of control and the system 1 described above permit substantially automatic checking that the food products loaded in the mixing unit 2 effectively correspond to those established by the recipe selected.

According to a second embodiment of this invention, not illustrated, the system 1 is without the weight sensor 16 and the method for controlling loading differs from the preferred embodiment described above in that acquisition of the geographic coordinates CG2 comprises the following steps:
- waiting for the operator of the loader unit 3 to enter a confirmation command by means of the interface device 17; and
- querying the GPS receiver 12 following entry of such confirmation command in order to obtain the geographic coordinates GC2.

The confirmation command must be entered by the operator after visually checking that the loading means 6 are ready to take the food product from the stocking area 5. For this reason, functioning of the system 1 according to such embodiment is substantially semiautomatic.

The differences between the method according to such embodiment and the method according to the preferred embodiment described previously are also reflected in a different configuration of the control unit 15. In particular, the control unit 15 is configured to query the GPS receiver 12 after the interface device 17 has acquired the confirmation command.

A third embodiment, not illustrated, of the present invention is now described and applies to the case in which the mixing unit 2 is self-propelled in order to move to the various stocking areas 5 in the order defined by the list of food products of the recipe, and comprises a generic loader unit 3 for directly taking the food product from the stocking area 5 reached. For example, the loader unit 3 is of the type comprising at least a conveyor and/or at least an auger mounted on the mixing unit 2 to take the food product from the stocking area 5 reached. According to such embodiment, the system 1 is without the communication modules 13 and 14, the control unit 15 and weight sensor 16. The GPS receiver 12 is connected to the processing unit 10 and is preferably incorporated in the weighing device 7, even though, alternatively, it may be mounted on the loader unit 3. In both the above arrangements, the GPS receiver 12 is associated to the loader unit 3. The method for controlling loading differs from the preferred embodiment described above in that acquisition of the geographic coordinates CG2 comprises the following steps:
- waiting for the operator of the mixing unit 2 to enter a confirmation command by means of the interface device 11; and
- querying the GPS receiver 12 following entry of such confirmation command in order to obtain the geographic coordinates GC2.

The confirmation command must be entered by the operator after visually checking that the loading means 6 of the loader unit 3 are ready to take the food product from the stocking area 5. The processing unit 10 is configured to query the GPS receiver 12 after the interface device 11 has acquired the confirmation command.

The main advantage of the method and of the system 1 described above is that of permitting control of loading of the food products in the mixing unit 2 by means of at least one loader unit 3 that permits automatic or semiautomatic checking that each food product loaded is that effectively programmed by the recipe saved in the weighing device 7 of the mixing unit 2, without the operator of the mixing unit 2 having to check personally that the stocking area 5 from which the loader unit 3 takes the food product is the correct area.

## Claims

1. Method for controlling loading of food products in a food mixing unit (2), which loading occurs by means of at least one loader unit (3); the mixing unit (2) comprising a weighing device (7), which comprises storage means (9) to store at least one recipe comprising a list of food products to be loaded in the mixing unit (2) and is suitable to check the weight of the food products of the recipe as they are loaded in the mixing unit (2); the loader unit (3) being suitable to take each food product from at least one relative stocking area (5); the method being **characterised in that** it comprises the steps of:
- identifying each stocking area (5) by means of a respective set of points in space, each of them defined by the relative geographic coordinates (GC1);
- associating to each food product of the recipe at least the set of points identifying said at least one relative stocking area (5);
- storing in said storage means (9), for each food product of the recipe, the first geographic coordinates (GC1) of the set of points associated to said food product;
- acquiring, by the weighing device (7), for each food product of the recipe being loaded, second geographic coordinates (GC2) identifying the place where the loader unit (3) is located when it takes the food product from a stocking area (5), by means of at least one GPS receiver (12) associated to the loader unit (3); and
- comparing, by the weighing device (7), the second geographic coordinates (GC2) with the first geographic coordinates (GC1) associated to the food product being loaded in order to check whether the correct food product is being taken.

2. Method according to Claim 1, wherein the set of points associated to each said food product of the recipe comprises at least three points; said step of comparing the second geographic coordinates (GC2) with the first geographic coordinates (GC1) associated to the food product being loaded comprising the step of checking whether the point defined by the second geographic coordinates (GC2) is inside a polygon defined by the set of points associated to the food product being loaded.

3. Method according to Claim 1 or 2, wherein the loader unit (3) is self-propelled in order to reach said stocking area (5) and to carry the relative food product from the stocking area (5) to the mixing unit (2); said GPS receiver (12) being mounted on the loader unit (3).

4. Method according to Claim 3, wherein said loader unit (3) comprises loading means (6) to take a food product from said relative stocking area (5) and to load the taken food product into said mixing unit (2); said step of acquiring, by the weighing device (7), for each food product of the recipe being loaded, second geographic coordinates (GC2) identifying the place where the loader unit (3) is located, comprising the steps of:
- detecting, by weight detecting means (16) connected to said loading means (6), the presence of the food product on the loading means (6);
- if the food product is present on the loading means (6), querying said GPS receiver (12) to obtain the second geographic coordinates (GC2); and
- transmitting the second geographic coordinates (GC2) from the loader unit (3) to the weighing device (7) by communication means (13, 14) mounted on the loader unit (3) and on the weighing device (7).

5. Method according to Claim 3, wherein said step of acquiring, by the weighing device (7), for each food product of the recipe being loaded, second geographic coordinates (GC2) identifying the place where the loader unit (3) is located, comprises the steps of:
- waiting for an operator of said loader unit (3) to enter a first command by means of first man-machine interface means (17) mounted on the loader unit (3);
- querying said GPS receiver (12) following entry of the first command in order to obtain the second geographic coordinates (GC2); and
- transmitting the second geographic coordinates (GC2) from the loader unit (3) to the weighing device (7) by communication means (13, 14) mounted on the loader unit (3) and the weighing device (7).

6. Method according to Claim 1 or 2, wherein said mixing unit (2) is self-propelled in order to reach said stocking area (5) and comprises said loader unit (3) to retrieve the food product directly from the stocking area (5).

7. Method according to Claim 6, wherein said weighing device (7) comprises second man-machine interface means (11); said step of acquiring, by the weighing device (7), for each food product of the recipe being loaded, second geographic coordinates (GC2) identifying the place where the loader unit (3) is located, comprising the steps of:
- waiting for an operator of said mixing unit (2) to enter a second command by means of the second man-machine interface means (11);
- querying said GPS receiver (12) following entry of the second command in order to obtain the second geographic coordinates (GC2).

8. Method according to any one of Claims 1-7, comprising the step of emitting at least one visual or acoustic error signal if the comparison between said second geographic coordinates (GC2) and said first geographic coordinates (GC1) associated to the food product being loaded reveals that an wrong food product is being taken.

9. System for controlling loading of food products in a food mixing unit (2), which loading occurs by means of at least one loader unit (3); the system (1) comprising a weighing device (7), which is mounted on the mixing unit (2), comprises storage means (9) to store at least one recipe comprising a list of food products to be loaded in the mixing unit (2) and comprises processing means (10) configured to check the weight of the food products as they are loaded in the mixing unit (2); the loader unit (3) being suitable to take each food product of the recipe from at least one relative stocking area (5); the system (1) being **characterised in that** said storage means (9) are suitable to store, for each food product of the recipe, first geographic coordinates (GC1) relative to a set of points which is associated to the food product and identifies the stocking area (5) relative to the food product; **in that** it comprises at least one GPS receiver (12) associated to the loader unit (3) to detect second geographic coordinates (GC2) identifying the place where the loader unit (3) is located; and **in that** said processing means (10) are configured to acquire the second geographic coordinates (GC2) for each food product being loaded when the loader unit (3) takes the food product from a stocking area (5) and to compare the second coordinates (GC2) acquired for the food product being loaded with the first geographic coordinates (GC1) associated to the food product being loaded in order to check whether the correct food product is being taken.

10. System according to Claim 9, wherein the set of points associated to each food product of said recipe comprises at least three points; said processing means (10) being configured to check whether the point defined by said second geographic coordinates (GC2) is inside a polygon defined by the set of points associated to the food product being loaded.

11. System according to Claim 9 or 10, wherein said loader unit (3) is self-propelled in order to reach said stocking area (5) and to carry the relative food product from the stocking area (5) to the mixing unit (2); said GPS receiver (12) being mounted on the loader unit (3).

12. System according to Claim 11, wherein said loader unit (3) comprises loading means (6) to take a food product from said relative stocking area (5) and to load the taken food productin said mixing unit (2); the system (1) comprising: weight detecting means (16) connected to said loading means (6) to detect the presence of a food product on the loading means (6); control means (15) which are mounted on the loader unit (3), are connected to the weight detecting means (16) and to said GPS receiver (12) and are configured to query the GPS receiver (12) in case the food product is present on the loading means (6) in order to obtain said second coordinates (GC2); and communication means (13, 14) mounted on the loader unit (3) and on said weighing device (7) to transmit the second geographic coordinates (GC2) from the loader unit (3) to the weighing device (7).

13. System according to Claim 11, comprising: first man-machine interface means (17) mounted on said loader unit (3) to allow an operator of the loader unit (3) to enter a first command; control means (15), which are mounted on the loader unit (3), are connected to the first man-machine interface means (17) and to said GPS receiver (12) and are configured to query the GPS receiver (12) following entry of the first command in order to obtain said second coordinates (GC2); and communication means (13, 14) mounted on the loader unit (3) and on said weighing device (7) to transmit the second geographic coordinates (GC2) from the loader unit (3) to the weighing device (7).

14. System according to Claim 9 or 10, wherein said mixing unit (2) is self-propelled in order to reach said stocking area (5) and comprises said loader unit (3) to directly take the food product from the stocking area (5).

15. System according to Claim 14, wherein said weighing device (7) comprises second man-machine interface means (11) which are connected to said processing means (10) and allow an operator of said mixing unit (2) to enter a second command; said processing means (10) being connected to said GPS receiver (12) and being configured to query the GPS receiver (12) following entry of the second command in order to obtain said second coordinates (GC2).

16. System according to Claim 12 or 13, wherein said communication means (13, 14) comprise a first wireless communication module (13), which is incorporated in said weighing device (7) and is connected to said processing means (10) and, at least one second wireless communication module (14), which is monted on said at least one loader unit (3), is suitable to communicate with the first wireless communication module (13) and is connected to said GPS receiver (12).

17. System according to any one of Claims 9-16 wherein said weighing device (7) comprises second man-machine interface means (11), which are connected to said processing means (10) and are suitable to emit visual and/or acoustic signals; the processing means (10) being configured to control the second man-machine interface means (11) so that they emit at least one visual or acoustic error signal in the case in which the comparison between said second geographic coordinates (GC2) and said first geographic coordinates (GC1) associated to the food product being loaded reveals that a wrong food product is being taken.

## Patentansprüche

1. Verfahren zur Steuerung der Ladung von Lebensmittelprodukten in eine Lebensmittelmischeinrichtung (1), wobei das Laden mittels mindestens einer Ladeeinheit (3) erfolgt, wobei die Mischeinheit (2) eine Wiegevorrichtung (7) aufweist, die ihrerseits Speichermittel (9) umfasst zur Speicherung von mindestens einem Rezept, welches eine Liste von Nahrungsmittelprodukten enthält, die in die Mischeinheit (2) geladen werden sollen, und die geeignet ist um das Gewicht der Nahrungsmittelprodukte des Rezepts wenn sie in die Mischeinheit geladen werden zu überprüfen, wobei die Ladeeinheit (3) geeignet ist, jedes Nahrungsmittelprodukt von mindestens einer relativen Lagerfläche bzw. Ladefläche (5) aufzunehmen und wobei das Verfahren **dadurch gekennzeichnet ist, dass** die folgenden Schritte vorgesehen sind:
- Identifizieren jeder Lagerfläche (5) mittels eines entsprechenden Satzes von Punkten im Raum, wobei jeder durch die relativen geografischen Koordinaten (GC1) definiert ist;
- Zuordnen zu jedem Nahrungsmittelprodukte des Rezepts mindestens eines Satzes von Punkten, der die erwähnte mindestens eine relative Lagerfläche (5) identifiziert;
- Speichern in den Speichermittel (9) für jedes Nahrungsmittelprodukt des Rezepts, die ersten geografischen Koordinaten (GC1) des Satzes von Punkten, die mit dem Nahrungsmittelprodukt assoziiert sind;
- Erfassen durch die Wiegevorrichtung (7) für jedes Nahrungsmittelprodukt des Rezepts, das geladen wird, zweite geografische Koordinaten (GC2) die den Platz identifizieren, wo die Ladeeinheit (3) angeordnet ist, wenn sie das Nahrungsmittelprodukt von einer Lagerfläche (5) aufnimmt, und zwar durch mindestens einen GPS Empfänger (12) assoziiert mit der Ladeeinheit (3), und
- Vergleichen durch die Wiegevorrichtung (7), die zweiten geografischen Koordinaten (GC2) mit den ersten geografischen Koordinaten (GC1) assoziiert mit dem Nahrungsmittelprodukt das geladen wird, um zu prüfen, ob das korrekte Nahrungsmittelprodukt genommen wird.

2. Verfahren nach Anspruch 1, wobei der Satz von Punkten assoziiert mit jedem erwähnten Nahrungsmittelprodukt des Rezepts mindestens drei Punkte aufweist; wobei der Schritt des Vergleichens der zweiten geografischen Koordinaten (GC2) mit den ersten geografischen Koordinaten (GC1) assoziiert mit dem Nahrungsmittelprodukt, welches geladen wird, den Schritt des Prüfens aufweist, ob der durch die zweiten geografischen Koordinaten (GC2) definierte Punkt innerhalb eines Polygons liegt, das definiert ist durch den Satz von Punkten assoziiert mit dem in Ladung befindlichen Nahrungsmittelprodukt.

3. Verfahren nach Anspruch 1 oder 2, wobei die Ladeneinheit (3) selbst angetrieben ist, um die Lagerfläche (5) zu erreichen, und um das relative Nahrungsmittelprodukt von der Lagerfläche (5) zur Mischeinheit (2) zu transportieren, wobei der GPS Empfänger (12) auf der Ladeeinheit (3) angebracht ist.

4. Verfahren nach Anspruch 3, wobei die Ladeeinheit (3) Lademittel (6) aufweist, um ein Nahrungsmittelprodukt aus der relativen Lagerfläche (5) zu entnehmen und um das entnommene Nahrungsmittelprodukt in die Mischeinheit (2) zu laden; wobei der Schritt der Erfassung durch die Wiegevorrichtung für jedes Nahrungsmittelprodukt des Rezepts, das geladen wird, zweite geografischer Koordinaten (GC2), die den Platz definieren, wo die Ladeeinheit (3) angeordnet ist, die folgenden Schritte aufweist:
- Detektieren durch Gewichtsdetektionsmittel (16) verbunden mit den Lademitteln (6) das Vorhandensein des Nahrungsmittelproduktes auf den Lademitteln (6);
- wenn das Nahrungsmittelprodukt auf den Lademitteln (6) vorhanden ist, Abfragen des GPS Empfängers (12) zum Erhalt der zweiten geografischen Koordinaten (GC2); und
- Senden der zweiten geografischen Koordinaten (GC2) von der Ladeeinheit (3) zu der Wiegevorrichtung (7) durch Kommunikationsmittel (13, 14) angebracht auf der Ladeeinheit (3) und auf der Wiegevorrichtung (7).

5. Verfahren nach Anspruch 3, wobei der Schritt der Erfassung durch die Wiegevorrichtung (7), für jedes Nahrungsmittelprodukt des Rezepts, welches geladen wird, von zweiten geografischen Koordinaten (GC2), die den Platz definieren, wo die Ladeeinheit (3) angeordnet ist, die folgenden Schritte aufweist:
- Warten bis ein Benutzer der erwähnten Ladeeinheit (3) einen ersten Befehl eingibt und zwar mittels erster Mensch/Maschine-Interface-Mittel (17) angebracht auf der Ladeeinheit (3);
- Abfragen des GPS Empfängers (12) darauf folgend auf die Eingabe des ersten Befehls um die zweiten geografischen Koordinaten (GC2) zu erhalten; und
- Senden der zweiten geografischen Koordinaten (GC2) von der Ladeeinheit (3) zu der Wiegevorrichtung (7) durch Kommunikationsmittel (13, 14) angebracht auf der Ladeeinheit (3) und der Wiegevorrichtung (7).

6. Verfahren nach Anspruch 1 oder 2, wobei die Mischeinheit (2) selbst angetrieben ist um die Lagerfläche (5) zu erreichen, und wobei die Ladeeinheit (3) das Nahrungsmittelprodukt direkt von der Lagerfläche (5) entnimmt.

7. Verfahren nach Anspruch 6, wobei die Wiegevorrichtung (7) zweite Mensch/Maschine-Interface-Mittel (11) aufweist, und wobei der Schritt des Erfassens durch die Wiegevorrichtung (7), für jedes Nahrungsmittelprodukt des in Ladung befindlichen Rezepts, der zweiten geografischen Koordinaten (GC2), die den Platz, wo die Ladeeinheit (3) angeordnet ist, identifizieren, die folgenden Schritte aufweist:
- Warten bis ein Benutzer der Mischeinheit (2) einen zweiten Befehl mittels der zweiten Mensch/Maschine-Interface-Mittel (11) eingibt;
- Abfragen des GPS Empfängers (12) darauffolgend auf die Eingabe des zweiten Befehls, um die zweiten geografischen Koordinaten (GC2) zu erhalten.

8. Verfahren nach einem der Ansprüche 1 bis 7, wobei der Schritt des Emittierens von mindestens einem sichtbaren oder akustischen Fehlersignal vorgesehen ist, wenn der Vergleich zwischen den zweiten geografischen Koordinaten (GC2) und den ersten geografischen Koordinaten (GC1) assoziiert mit dem in Ladung befindlichen Nahrungsmittelprodukt enthüllt, dass ein falsches Nahrungsmittelprodukt genommen wird.

9. System zur Steuerung des Ladens von Nahrungsmittelprodukten in einer Nahrungsmischeinheit (2), wobei das Laden mittels mindestens einer Ladeeinheit (3) erfolgt, und wobei das System (1) eine auf der Mischeinheit (2) angebrachte Wiegevorrichtung (7) aufweist, die Folgendes aufweist: Speichermittel (9) zum Speichern von mindestens einem Rezept, welches eine Liste von Nahrungsmittelprodukten, die in die Mischeinheit (2) geladen werden sollen, umfasst, Verarbeitungsmittel (10) konfiguriert zum Prüfen des Gewichts der Nahrungsmittelprodukte wenn sie in die Mischeinheit (2) geladen wird; wobei die Ladeeinheit (3) geeignet ist, um jedes Nahrungsmittelprodukt des Rezepts aus mindestens einer relativen Lagerfläche (5) zu entnehmen und wobei das System (1) **dadurch gekennzeichnet ist, dass** die Speichermittel (9) geeignet sind zur Speicherung erster geografischer Koordinaten (GC1) für jedes Nahrungsmittelprodukt des Rezepts und relativ zu einem Satz von Punkten, der mit dem Nahrungsmittelprodukt assoziiert ist, und die Lagerfläche (5) relativ zum Nahrungsmittelprodukt zu identifizieren,
dass das System wenigstens einen GPS Empfänger (12) aufweist, und zwar assoziiert mit der Ladeeinheit (3) zum Detektieren zweiter geografischer Koordinaten (GC2) die den Platz definieren wo die Ladeeinheit (3) angeordnet ist, und ferner **dadurch gekennzeichnet, dass** die Verarbeitungsmittel (10) konfiguriert sind zum Erfassen zweiter geografischer Koordinaten (GC2) für jedes Nahrungsmittelprodukt welches geladen wird, wenn die Ladeeinheit (3) das Nahrungsmittelprodukt aus der Lagerfläche (5) entnimmt und zum Vergleichen der zweiten geografischen Koordinaten (GC2) erfasst für das Nahrungsmittelprodukt welches geladen wird mit den ersten geografischen Koordinaten (GC1) assoziiert mit dem Nahrungsmittelprodukt, welches geladen wird, um zu prüfen, ob das richtige Nahrungsmittelprodukt genommen wurde.

10. System nach Anspruch 9, wobei der Satz von Punkten assoziiert mit jedem Nahrungsmittelprodukt des Rezepts mindestens drei Punkte aufweist, wobei die Verarbeitungsmittel (10) konfiguriert sind zur Überprüfung, ob der durch die zweiten geografischen Koordinaten (GC2) definierte Punkt innerhalb eines Polygons liegt, welches definiert ist durch den Satz von Punkten assoziiert mit dem in Ladung befindlichen Nahrungsmittelprodukt.

11. System nach Anspruch 9 oder 10, wobei die Ladeneinheit (3) selbst angetrieben ist, um die Lagerfläche (5) zu erreichen, und um das relative Nahrungsmittelprodukt von der Lagerfläche (5) zur Mischeinheit (2) zu transportieren, wobei der erwähnte GPS Empfänger (12) auf der Ladeeinheit (3) angebracht ist.

12. System nach Anspruch 11, wobei die Ladeeinheit (3) Lademittel (6) aufweist, um ein Nahrungsmittelprodukt aus der relativen Lagerfläche (5) zu entnehmen und das entnommene Nahrungsmittelprodukt in die Mischeinheit (2) zu laden, und wobei das System (1) ferner Folgendes aufweist: Gewichtsdetektiermittel (16) verbunden mit den Lademitteln (6) um das Vorhandensein eines Nahrungsmittelproduktes auf den Lademitteln (6) zu detektieren; Steuermittel (15), die auf der Ladeeinheit (3) angebracht sind, und die verbunden sind mit den Gewichtsdetektionsmitteln (16) und mit dem GPS Empfänger (12), und die ferner konfiguriert sind, um den GPS Empfänger (12) abzufragen im Falle, dass das Nahrungsmittelprodukt auf den Lademitteln (6) vorhanden ist, um die erwähnten zweiten Koordinaten (GC2) zu erhalten, und Verbindungsmittel (13, 14) angebracht auf der Ladeeinheit (3) und auf der Wiegevorrichtung (7) um die zweiten geografischen Koordinaten (GC2) von der Ladeeinheit (3) zu der Wiegevorrichtung (7) zu übertragen.

13. System nach Anspruch 11, wobei Folgendes vorgesehen ist: erste Mensch/Maschine-Interface-Mittel (17) angebracht auf der Ladeeinheit (3), um zu gestatten, dass ein Benutzer der erwähnten Ladeeinheit (3) einen ersten Befehl eingibt; Steuermittel (15), die auf der Ladeeinheit (3) angebracht sind, und zwar verbunden mit dem ersten Mensch/Maschine-Interface-Mitteln (17) und mit dem GPS Empfänger (12) und konfiguriert zur Abfrage des GPS Empfängers (12) darauffolgend auf die Eingabe des ersten Befehls um die zweiten Koordinaten (GC2) zu erhalten; und wobei Kommunikationsmittel (13, 14) vorgesehen sind, und zwar angebracht auf der Ladeeinheit (3) und auf der Wiegevorrichtung (7) um die zweiten geografischen Koordinaten (GC2) von der Ladeeinheit (3) zur Wiegevorrichtung (7) zu übertragen.

14. System nach Anspruch 9 oder 10, wobei die Mischeinheit (2) selbst angetrieben ist, um die Lagerfläche (5) zu erreichen, und wobei die Ladeeinheit (3) vorgesehen ist, um das Nahrungsmittelprodukt direkt von der Lagerfläche (5) zu entnehmen.

15. System nach Anspruch 14, wobei die Wiegevorrichtung (7) zweite Mensch/Maschine-Interface-Mittel (11) aufweist, die mit den Verarbeitungs- oder Processingmitteln (10) verbunden ist, und gestatten dass ein Benutzer der Mischeinheit (2) einen zweiten Befehl eingeben kann, wobei die Verarbeitungsmittel (10) mit dem GPS Empfänger (12) verbunden sind, und konfiguriert sind um den GPS Empfänger (12) abzufragen, und zwar folgend auf die Eingabe des zweiten Befehls um die zweiten Koordinaten (GC2) zu erhalten.

16. System nach Anspruch 12 oder 13, wobei die Kommunikationsmittel (13, 14) ein erstes drahtloses Kommunikationsmodul (13) umfassen, welches in der Wiegevorrichtung (7) inkorporiert ist, und verbunden ist mit den Verarbeitungsmitteln (10) und mit mindestens einem zweiten drahtlosen Kommunikationsmodul (14), welches auf der erwähnten mindestens einen Ladeeinheit (3) angebracht ist, und zwar geeignet zur Kommunikation mit dem ersten drahtlosen Kommunikationsmodul (13) und ferner verbunden mit dem erwähnten GPS Empfänger (12).

17. System nach einem der Ansprüche 9 bis 16, wobei die Wiegevorrichtung (7) zweite Mensch/Maschine-Interface-Mittel (11) aufweist, die mit den Verarbeitungsmitteln (10) verbunden sind, und geeignet sind sichtbare und/oder akustische Signale zu senden, wobei die Verarbeitungsmittel (10) konfiguriert sind, um die zweiten Mensch/Maschine-Interface-Mittel (11) derart zu steuern, dass diese mindestens ein sichtbares oder akustisches Fehlersignal in einem Fall emittieren, in dem der Vergleich zwischen den zweiten geografischen Koordinaten (GC2) und den ersten geografischen Koordinaten (GC1) assoziiert mit dem Nahrungsmittelprodukt welches geladen wird, enthüllen oder zeigen, dass das falsche Nahrungsmittelprodukt genommen wird.

## Revendications

1. Procédé destiné à contrôler le chargement de produits alimentaires dans une unité de mélange d'aliments (2), lequel chargement a lieu au moyen d'au moins une unité de chargement (3); l'unité de mélange (2) comprenant un dispositif de pesée (7), qui comprend des moyens de stockage (9) pour stocker au moins une recette comprenant une liste de produits alimentaires à charger dans l'unité de mélange (2) et est adapté pour vérifier le poids des produits alimentaires de la recette au fur et à mesure de leur chargement dans l'unité de mélange (2); l'unité de chargement (3) étant adaptée pour prélever chaque produit alimentaire depuis au moins une zone de stockage relative (5); le procédé étant **caractérisé en ce qu'**il comprend les étapes consistant à :
- identifier chaque zone de stockage (5) au moyen d'un ensemble respectif de points dans l'espace, chacun d'entre eux étant défini par les coordonnées géographiques relatives (GC1) ;
- associer à chaque produit alimentaire de la recette au moins l'ensemble de points identifiant ladite zone de stockage relative (5), au moins au nombre de une;
- stocker dans lesdits moyens de stockage (9), pour chaque produit alimentaire de la recette, les premières coordonnées géographiques (GC1) de l'ensemble de points associé audit produit alimentaire ;
- acquérir, par le dispositif de pesée (7), pour chaque produit alimentaire de la recette en cours de chargement, des secondes coordonnées géographiques (GC2) identifiant le lieu où l'unité de chargement (3) est située lorsqu'elle prélève le produit alimentaire depuis une zone de stockage (5), au moyen d'au moins un récepteur GPS (12) associé à l'unité de chargement (3); et
- comparer, par le dispositif de pesée (7), les secondes coordonnées géographiques (GC2) avec les premières coordonnées géographiques (GC1) associées au produit alimentaire en cours de chargement afin de vérifier si le bon produit alimentaire est en cours de prélèvement.

2. Procédé selon la revendication 1, dans lequel l'ensemble de points associé à chaque dit produit alimentaire de la recette comprend au moins trois points; ladite étape consistant à comparer les secondes coordonnées géographiques (GC2) avec les premières coordonnées géographiques (GC1) associées au produit alimentaire en cours de chargement comprenant l'étape consistant à vérifier si le point défini par les secondes coordonnées géographiques (GC2) se trouve à l'intérieur d'un polygone défini par l'ensemble de points associé au produit alimentaire en cours de chargement.

3. Procédé selon la revendication 1 ou 2, dans lequel l'unité de chargement (3) est autopropulsée afin d'atteindre ladite zone de stockage (5) et d'acheminer le produit alimentaire relatif de la zone de stockage (5) à l'unité de mélange (2) ; ledit récepteur GPS (12) étant monté sur l'unité de chargement (3).

4. Procédé selon la revendication 3, dans lequel ladite unité de chargement (3) comprend des moyens de chargement (6) pour prélever un produit alimentaire dans ladite zone de stockage relative (5) et pour charger le produit alimentaire prélevé dans ladite unité de mélange (2) ; ladite étape consistant à acquérir, par le dispositif de pesée (7), pour chaque produit alimentaire de la recette en cours de chargement, des secondes coordonnées géographiques (GC2) identifiant le lieu où l'unité de chargement (3) est située, comprenant les étapes consistant à :
- détecter, par des moyens de détection de poids (16) connectés auxdits moyens de chargement (6), la présence du produit alimentaire sur les moyens de chargement (6) ;
- si le produit alimentaire est présent sur les moyens de chargement (6), interroger ledit récepteur GPS (12) pour obtenir les secondes coordonnées géographiques (GC2) ; et
- transmettre les secondes coordonnées géographiques (GC2) de l'unité de chargement (3) au dispositif de pesée (7) par des moyens de communication (13, 14) montés sur l'unité de chargement (3) et sur le dispositif de pesée (7).

5. Procédé selon la revendication 3, dans lequel ladite étape consistant à acquérir, par le dispositif de pesée (7), pour chaque produit alimentaire de la recette en cours de chargement, des secondes coordonnées géographiques (GC2) identifiant le lieu où l'unité de chargement (3) est située, comprend les étapes consistant à :
- attendre qu'un opérateur de ladite unité de chargement (3) entre une première instruction au moyen de premiers moyens d'interface homme-machine (17) montés sur l'unité de chargement (3) ;
- interroger ledit récepteur GPS (12) suite à l'entrée de la première instruction afin d'obtenir les secondes coordonnées géographiques (GC2) ; et
- transmettre les secondes coordonnées géographiques (GC2) de l'unité de chargement (3) au dispositif de pesée (7) par des moyens de communication (13, 14) montés sur l'unité de chargement (3) et sur le dispositif de pesée (7).

6. Procédé selon la revendication 1 ou 2, dans lequel ladite unité de mélange (2) est autopropulsée afin d'atteindre ladite zone de stockage (5) et comprend ladite unité de chargement (3) pour récupérer le produit alimentaire directement depuis la zone de stockage (5).

7. Procédé selon la revendication 6, dans lequel ledit dispositif de pesée (7) comprend des seconds moyens d'interface homme-machine (11) ; ladite étape consistant à acquérir, par le dispositif de pesée (7), pour chaque produit alimentaire de la recette en cours de chargement, des secondes coordonnées géographiques (GC2) identifiant le lieu où l'unité de chargement (3) est située, comprenant les étapes consistant à :
- attendre qu'un opérateur de ladite unité de mélange (2) entre une seconde instruction au moyen des seconds moyens d'interface homme-machine (11) ;
- interroger ledit récepteur GPS (12) suite à l'entrée de la seconde instruction afin d'obtenir les secondes coordonnées géographiques (GC2).

8. Procédé selon l'une quelconque des revendications 1 à 7, comprenant l'étape consistant à émettre au moins un signal d'erreur visuel ou sonore si la comparaison entre lesdites secondes coordonnées géographiques (GC2) et lesdites premières coordonnées géographiques (GC1) associées au produit alimentaire en cours de chargement révèle qu'un mauvais produit alimentaire est en cours de prélèvement.

9. Système destiné à contrôler le chargement de produits alimentaires dans une unité de mélange d'aliments (2), lequel chargement a lieu au moyen d'au moins une unité de chargement (3) ; le système (1) comprenant un dispositif de pesée (7), qui est monté sur l'unité de mélange (2), comprend des moyens de stockage (9) pour stocker au moins une recette comprenant une liste de produits alimentaires à charger dans l'unité de mélange (2) et comprend des moyens de traitement (10) configurés pour vérifier le poids des produits alimentaires au fur et à mesure de leur chargement dans l'unité de mélange (2) ; l'unité de chargement (3) étant adaptée pour prélever chaque produit alimentaire de la recette depuis au moins une zone de stockage relative (5) ; le système (1) étant **caractérisé en ce que** lesdits moyens de stockage (9) sont adaptés pour stocker, pour chaque produit alimentaire de la recette, des premières coordonnées géographiques (GC1) relatives à un ensemble de points qui est associé au produit alimentaire et identifie la zone de stockage (5) relative au produit alimentaire ; **en ce qu'**il comprend au moins un récepteur GPS (12) associé à l'unité de chargement (3) pour détecter des secondes coordonnées géographiques (GC2) identifiant le lieu où l'unité de chargement (3) est située ; et **en ce que** lesdits moyens de traitement (10) sont configurés pour acquérir les secondes coordonnées géographiques (GC2) pour chaque produit alimentaire en cours de chargement lorsque l'unité de chargement (3) prélève le produit alimentaire depuis une zone de stockage (5) et pour comparer les secondes coordonnées (GC2) acquises pour le produit alimentaire en cours de chargement avec les premières coordonnées géographiques (GC1) associées au produit alimentaire en cours de chargement afin de vérifier si le bon produit alimentaire est en cours de prélèvement.

10. Système selon la revendication 9, dans lequel l'ensemble de points associé à chaque produit alimentaire de ladite recette comprend au moins trois points; lesdits moyens de traitement (10) étant configurés pour vérifier si le point défini par lesdites secondes coordonnées géographiques (GC2) se trouve à l'intérieur d'un polygone défini par l'ensemble de points associé au produit alimentaire en cours de chargement.

11. Système selon la revendication 9 ou 10, dans lequel ladite unité de chargement (3) est autopropulsée afin d'atteindre ladite zone de stockage (5) et d'acheminer le produit alimentaire relatif de la zone de stockage (5) à l'unité de mélange (2) ; ledit récepteur GPS (12) étant monté sur l'unité de chargement (3).

12. Système selon la revendication 11, dans lequel ladite unité de chargement (3) comprend des moyens de chargement (6) pour prélever un produit alimentaire depuis ladite zone de stockage relative (5) et pour charger le produit alimentaire prélevé dans ladite unité de mélange (2) ; le système (1) comprenant : des moyens de détection de poids (16) connectés auxdits moyens de chargement (6) pour détecter la présence d'un produit alimentaire sur les moyens de chargement (6); des moyens de commande (15), qui sont montés sur l'unité de chargement (3), sont connectés aux moyens de détection de poids (16) et audit récepteur GPS (12) et sont configurés pour interroger le récepteur GPS (12) dans le cas de la présence d'un produit alimentaire sur les moyens de chargement (6) afin d'obtenir lesdites secondes coordonnées géographiques (GC2) ; et des moyens de communication (13, 14) montés sur l'unité de chargement (3) et sur ledit dispositif de pesée (7) pour transmettre les secondes coordonnées géographiques (GC2) de l'unité de chargement (3) au dispositif de pesée (7).

13. Système selon la revendication 11, comprenant : des premiers moyens d'interface homme-machine (17) montés sur ladite unité de chargement (3) pour permettre à un opérateur de l'unité de chargement (3) d'entrer une première instruction; des moyens de commande (15), qui sont montés sur l'unité de chargement (3), sont connectés aux premiers moyens d'interface homme-machine (17) et audit récepteur GPS (12) et sont configurés pour interroger le récepteur GPS (12) suite à l'entrée de la première instruction afin d'obtenir lesdites secondes coordonnées (GC2) ; et des moyens de communication (13, 14) montés sur l'unité de chargement (3) et sur ledit dispositif de pesée (7) pour transmettre les secondes coordonnées géographiques (GC2) de l'unité de chargement (3) au dispositif de pesée (7).

14. Système selon la revendication 9 ou 10, dans lequel ladite unité de mélange (2) est autopropulsée afin d'atteindre ladite zone de stockage (5) et comprend ladite unité de chargement (3) pour prélever directement le produit alimentaire depuis la zone de stockage (5).

15. Système selon la revendication 14, dans lequel ledit dispositif de pesée (7) comprend des seconds moyens d'interface homme-machine (11) qui sont connectés auxdits moyens de traitement (10) et permettent à un opérateur de ladite unité de mélange (2) d'entrer une seconde instruction; lesdits moyens de traitement (10) étant connectés audit récepteur GPS (12) et étant configurés pour interroger le récepteur GPS (12) suite à l'entrée de la seconde instruction afin d'obtenir lesdites secondes coordonnées (GC2).

16. Système selon la revendication 12 ou 13, dans lequel lesdits moyens de communication (13, 14) comprennent un premier module de communication sans fil (13), qui est incorporé dans ledit dispositif de pesée (7) et est connecté auxdits moyens de traitement (10), et au moins un second module de communication sans fil (14), qui est monté sur ladite unité de chargement (3), au moins au nombre de une, est adapté pour communiquer avec le premier module de communication sans fil (13) et est connecté audit récepteur GPS (12).

17. Système selon l'une quelconque des revendications 9 à 16, dans lequel ledit dispositif de pesée (7) comprend des seconds moyens d'interface homme-machine (11), qui sont connectés auxdits moyens de traitement (10) et sont adaptés pour émettre des signaux visuels et/ou sonores; les moyens de traitement (10) étant configurés pour commander les seconds moyens d'interface homme-machine (11) de sorte qu'ils émettent au moins un signal d'erreur visuel ou sonore dans le cas où la comparaison entre lesdites secondes coordonnées géographiques (GC2) et lesdites premières coordonnées géographiques (GC1) associées au produit alimentaire en cours de chargement révèle qu'un mauvais produit alimentaire est en cours de chargement.
